# EUROPÄISCHE PATENTSCHRIFT

(11) **EP 2 746 533 B1**
(45) Veröffentlichungstag und Bekanntmachung des Hinweises auf die Patenterteilung: **01.04.2015**
(21) Anmeldenummer: 12197930.6
(22) Anmeldetag: 19.12.2012
(51) Int. Cl.: F01D 5/14

(54) **Schaufelgitter und Strömungsmaschine**
Blade grid and turbomachine
Grille d'aube et turbomachine

(43) Veröffentlichungstag der Anmeldung: 25.06.2014
(73) Patentinhaber: MTU Aero Engines AG, 80995 München (DE)
(72) Erfinder: Brettschneider, Markus, 80995 München (DE); Malzacher, Franz, 82194 Gröbenzell (DE)

(56) Entgegenhaltungen:
- EP-A1- 2 487 329
- EP-A2- 0 798 447
- EP-A2- 1 126 132
- EP-A2- 2 423 437
- US-A1- 2003 170 124

## Beschreibung

Die Erfindung betrifft ein Schaufelgitter einer Strömungsmaschine nach dem Oberbegriff des Patentanspruchs 1 und eine Strömungsmaschine.

Eine durch einen Strömungskanal geführte Fluidströmung wird durch einen seitlichen Druckgradienten parallel zur Seitenwand abgelenkt. Da wandnahe Strömungsschichten aufgrund ihrer geringen Geschwindigkeit stärker als wandferne Strömungsschichten abgelenkt werden, wird eine Sekundärströmung gebildet, die einer Hauptströmung überlagert ist. Dies führt unter Anderem zu Druckverlusten. Die Sekundärströmungen treten regelmäßig in Schaufelgittern von Strömungsmaschinen wie Gas- und Dampfturbinen auf. Die Schaufelgitter bestehen aus einer Vielzahl von in Umfangsrichtung nebeneinander angeordneten Schaufeln bzw. Schaufelblättern, die in einem rotationssymmetrischen Strömungskanal angeordnet sind und zwischen denen jeweils ein Schaufelkanal ausgebildet ist, in dem die Sekundärströmungen entstehen. Die Schaufelkanäle sind in Radialrichtung jeweils von einer radial äußeren gehäuseseitigen Seitenwand und von einer radial inneren nabenseitigen Seitenwand begrenzt. Gebildet werden die Seitenwände durch einen feststehenden Gehäuseabschnitt, durch einen Rotorabschnitt, durch radial innere Schaufeldeckplatten und/oder durch radial äußere Schaufeldeckplatten. In Umfangsrichtung sind die Schaufelkanäle jeweils durch eine Druckseite und eine gegenüberliegende Saugseite der benachbarten Schaufelblätter begrenzt.

Zur Verringerung der Sekundärströmungen bzw. Kanalwirbel werden in die Seitenwände häufig nicht-umfangssymmetrische Konturierungen in Form von Erhebungen und/oder Vertiefungen eingebracht. So wird beispielsweise in den Patentanmeldungen US 2006/0233641 A1 und US 2007/0258819 A1 vorgeschlagen, zumindest eine der Seitenwände mit zumindest zwei Konturierungen auszubilden, wobei die eine Konturierung als Erhebung und die zumindest eine weitere Konturierung als Vertiefung ausgebildet ist. Weiterer Stand der Technik ist aus der EP 2 487 329 A1 EP 2 423 437 A2, EP 1 126 132 A2, US 2003/170124 A1 und aus der EP 0 798 447 A2 bekannt.

Aufgabe der Erfindung ist es, ein Schaufelgitter für eine Strömungsmaschine mit einer reduzierten Sekundärströmung zu schaffen. Des Weiteren ist es Aufgabe der Erfindung, eine Strömungsmaschine mit einem verbesserten Wirkungsgrad zu schaffen.

Diese Aufgabe wird gelöst durch ein Schaufelgitter mit den Merkmalen des Patentanspruchs 1, und durch eine Strömungsmaschine mit den Merkmalen des Patentanspruchs 8.

Ein erfindungsgemäßes Schaufelgitter einer Strömungsmaschine hat eine Vielzahl von Schaufelkanälen, die in Umfangsrichtung jeweils von einer Druckseite eines Schaufelblattes und von einer gegenüberliegenden Saugseite eines benachbarten Schaufelblattes begrenzt sind. In Radialrichtung sind die Schaufelkanäle jeweils von zwei gegenüberliegenden Seitenwänden begrenzt. Zumindest jeweils eine der Seitenwände der Schaufelkanäle ist mit zumindest einer umfangsunsymmetrischen Seitenwandkonturierung im Bereich einer der Schaufelblätter versehen. Erfindungsgemäß weist das andere Schaufelblatt im Bereich seiner der Seitenwandkonturierung zugewandten Druckseite oder Saugseite zumindest eine sich stromab erstreckende Formvariation nahe der Seitenwand bzw. im Bereich der Seitenwand auf, wobei die Formvariation eine radiale Erstreckung bis zu etwa 15% einer Schaufelkanalhöhe hat, gemessen von der Seitenwandung 14, wobei wenn die Formvariation eine Aufdickung der Druckseite ist, sie sich von der Anströmkante 10a stromabwärts bis zu etwa 50% der axialen Breite des Schaufelblattes 2a erstreckt, und wenn die Formvariation eine in die Saugseite eingebrachte Abtragung ist, sie sich stromabwärts der Anströmkante in einem Bereich von etwa 10% bis 75% einer axialen Schaufelbreite erstreckt.

Durch die spezifische Gestaltung des Schaufelprofils bzw. Formvariation im Seitenwandbereich wird der vergleichbare positive Effekt wie durch die Seitenwandkonturierung erzielt. Somit wird durch die Kombination der Seitenwandkonturierung mit einer der Seitenwand nahen schaufelblattseitigen Formvariation ein statisches Druckfeld an der zumindest einen Seitenwand und an den gegenüberliegenden Schaufelblattseiten im Randbereich so beeinflusst, dass eine Sekundärströmung wesentlich reduziert wird. Hierdurch werden Strömungsverluste verringert und eine Zuströmung auf ein nachfolgendes Schaufelgitter wird verbessert. Die zumindest eine Formvariation stellt eine spezifische Gestaltung des Schaufelprofils im Seitenwandbereich dar, die sich sowohl auf eine Darstellung mit als auch ohne Fillet bezieht.

Bei einem Ausführungsbeispiel ist die Formvariation eine Aufdickung der Druckseite und die zumindest eine Seitenwandkonturierung ist eine saugseitige Vertiefung. Die Aufdickung ist eine dem Schaufelprofil in Strömungsrichtung folgende lokale Flächenerweiterung der Druckseite und bewirkt somit eine druckseitige Kanalquerschnittsverringerung. Die Aufdickung hat bevorzugterweise eine radiale Erstreckung, die maximal 15% einer Schaufelkanalhöhe entspricht.

Bevorzugterweise erstreckt sich die druckseitige Aufdickung stromab von einer schaufelblattseitigen Anströmkante und die saugseitige Vertiefung beginnt stromauf einer schaufelblattseitigen Anströmkante. Die Vertiefung erstreckt sich bevorzugterweise über bzw. nahezu über die gesamte axiale Breite der Saugseite.

Zudem kann stromab der Vertiefung eine Seitenwandkonturierung in Form einer saugseitigen Erhebung ausgebildet sein.

Bei einem alternativen Ausführungsbeispiel ist die Formvariation eine Abtragung der Saugseite und die zumindest eine Seitenwandkonturierung ist eine druckseitige Erhebung. Die Abtragung des Schaufelblattes ist eine dem Schaufelprofil in Strömungsrichtung folgende lokale Flächenerweiterung der Saugseite und bewirkt somit eine saugseitige Kanalquerschnittsvergößerung. Die Abtragung hat bevorzugterweise eine radiale Erstreckung, die maximal 15% einer Schaufelkanalhöhe entspricht.

Bevorzugterweise erstreckt sich die saugseitige Abtragung stromab einer schaufelblattseitigen Anströmkante und die druckseitige Erhebung beginnt stromauf einer schaufelblattseitigen Anströmkante. Vorteilhafterweise erstreckt sich die Erhebung bis zu einem Bereich, der etwa 60% einer axialen Schaufelbreite entspricht.

Eine bevorzugte Strömungsmaschine hat zumindest ein erfindungsgemäßes Schaufelgitter. Aufgrund der reduzierten Sekundärströmungen bzw. Kanalwirbel weist eine derartige Strömungsmaschine einen verbesserten Wirkungsgrad gegenüber einer Strömungsmaschine mit einem herkömmlichen Schaufelgitter auf.

Sonstige vorteilhafte Ausführungsbeispiele der Erfindung sind Gegenstand weiterer Unteransprüche.

Ein alternatives Schaufelgitter einer Strömungsmaschine hat eine Vielzahl von Schaufelkanälen, die in Umfangsrichtung jeweils von einer Druckseite eines Schaufelblattes und von einer gegenüberliegenden Saugseite eines benachbarten Schaufelblattes begrenzt sind. In Radialrichtung sind die Schaufelkanäle jeweils von zwei gegenüberliegenden Seitenwänden begrenzt sind. Die Druckseite und die gegenüberliegende Saugseite weisen jeweils zumindest eine sich stromab erstreckende Formvariation nahe bzw. im Bereich zumindest einer der Seitenwände auf. Je nach Ausbildung der Formvariationen kann der Schaufelkanal gegenüber einem Schaufelkanal ohne schaufelblattseitige Formvariationen querschnittsverringert oder querschnittsvergrößert sein.

Bevorzugterweise ist die druckseitige Formvariation eine lokale Aufdickung der Druckseite und die saugseitige Formvariation eine Abtragung der gegenüberliegenden Saugseite.

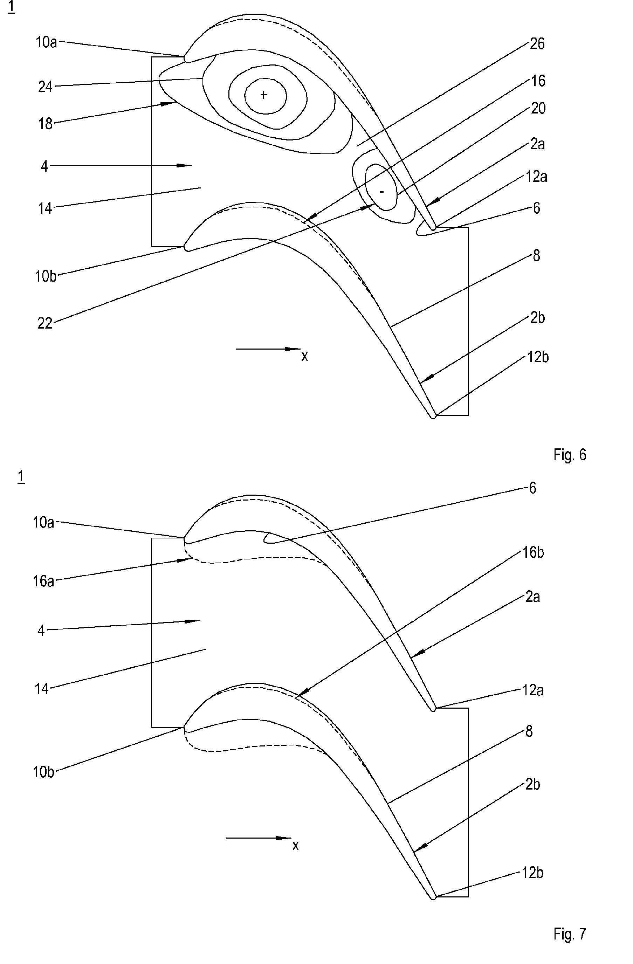

Im Folgenden werden bevorzugte Ausführungsbeispiele der Erfindung anhand schematischer Darstellungen näher erläutert, wobei das in Figur 7 gezeigte Schaufelgitter nicht von den Patentansprüchen umfasst ist. Es zeigen:
- Figur 1: einen abgewickelten Umfangsabschnitt eines ersten Ausführungsbeispiels eines erfindungsgemäßen Schaufelgitters,
- Figur 2a und 2b: Schnittansichten von alternativen Formvariationen entlang der Linie A-A in Figur 1,
- Figur 3: einen abgewickelten Umfangsabschnitt eines zweiten Ausführungsbeispiels des erfindungsgemäßen Schaufelgitters,
- Figur 4: einen abgewickelten Umfangsabschnitt eines dritten Ausführungsbeispiels des erfindungsgemäßen Schaufelgitters,
- Figur 5a und 5b: Schnittansichten von alternativen Formvariationen entlang der Linie B-B in Figur 2,
- Figur 6: einen abgewickelten Umfangsabschnitt eines vierten Ausführungsbeispiels des erfindungsgemäßen Schaufelgitters, und
- Figur 7: einen abgewickelten Umfangsabschnitt eines weiteren Schaufelgitters.

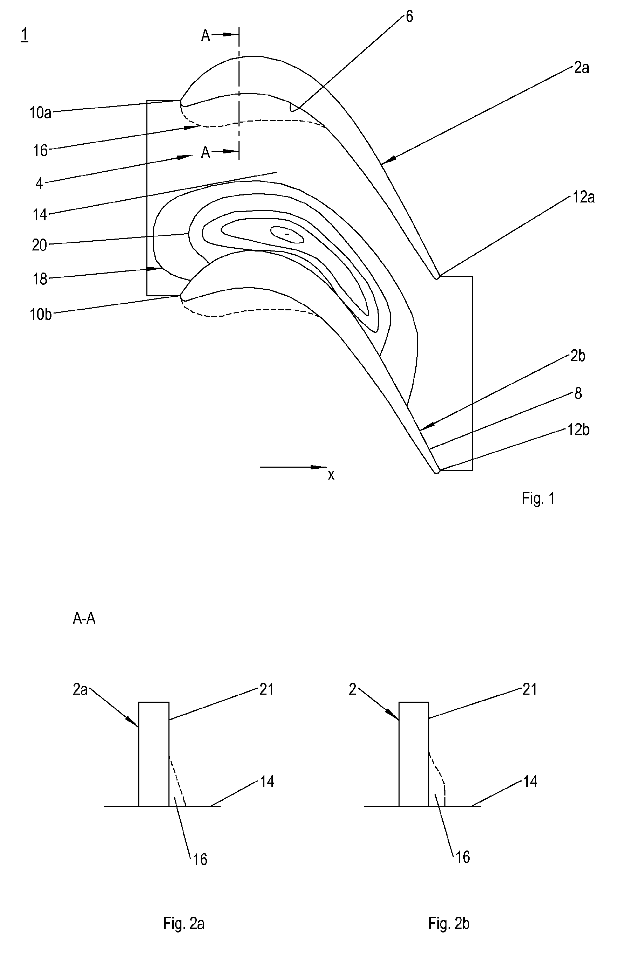

Wie in dem ersten Ausführungsbeispiel nach Figur 1 gezeigt, hat ein erfindungsgemäßes Schaufelgitter 1 eine Vielzahl von Schaufelblättern 2a, 2b, die in Umfangsrichtung des Schaufelgitters 1 nebeneinander angeordnet sind und jeweils einen Schaufelkanal 4 begrenzen. Das Schaufelgitter 1 ist bevorzugterweise ein Schaufelgitter einer axialen Strömungsmaschine wie ein Flugzeugtriebwerk oder eine stationäre Gasturbine. Beispielsweise ist das Schaufelgitter 1 in der Niederdruckturbine der Strömungsmaschine angeordnet.

Das Schaufelgitter 1 ist konzentrisch zu einer in Axialrichtung x verlaufenden nicht gezeigten Maschinenachse bzw. Rotorachse angeordnet. Es wird gemäß der Darstellung in Figur 1 von einer nicht gezeigten Hauptströmung von links nach rechts durchströmt, wobei die Hauptströmung in den Schaufelkanälen 4 in Umfangsrichtung entsprechend umgelenkt wird.

In Umfangsrichtung wird jeder Schaufelkanal 4 von einer Druckseite 6 des ersten Schaufelblattes 2a und von einer gegenüberliegenden Saugseite 8 des zweiten Schaufelblattes 2b begrenzt, die sich jeweils zwischen einer Anströmkante 10a, 10b und einer Abströmkante 12a, 12b der Schaufelblätter 2a, 2b erstrecken. In Axialrichtung x wird jeder Schaufelkanal 4 von den Anströmkanten 10a, 10b und von den Abströmkanten 12a, 12b begrenzt. In Radialrichtung wird jeder Schaufelkanal 4 von einer nabenseitigen bzw. inneren Seitenwand 14 begrenzt. Zudem wird jeder Schaufelkanal 4 in Radialrichtung von einer der inneren Seitenwandung gegenüberliegenden gehäuseseitigen bzw. äußeren Seitenwand begrenzt, die aufgrund der Schnittansicht nicht dargestellt ist. Die innere Seitenwand 14 wird beispielsweise von einem Rotorabschnitt oder einer schaufelfußseitigen Plattform gebildet. Die nicht dargestellte äußere Seitenwand wird beispielsweise von einem Gehäuseabschnitt oder einem schaufelblattspitzenseitigen äußeren Deckband gebildet und kann wie die innere Seitenwand 14 gestaltet sein.

Zumindest die innere Seitenwand 14 ist mit einer umfangsunsymmetrischen Seitenwandkonturierung18 und mit einer gegenüberliegenden druckseitigen Formvariation 16 der Druckseite 6 versehen.

Die Seitenwandkonturierung 18 ist eine saugseitige Vertiefung in Form eines Tals. Sie ist zeichnerisch durch eine Vielzahl von Tiefenlinien 20 dargestellt, wobei ihr maximaler bzw. tiefster Abschnitt mit einem Minuszeichen versehen ist. Sie beginnt stromauf der Abströmkante 10b und erstreckt sich in etwa über die gesamte axiale Breite des Schaufelblattes 2b. Dabei ist sie mit ihrem tiefsten Abschnitt von der Saugseite 8 in Umfangsrichtung beabstandet. Bevorzugterweise ist der tiefste Abschnitt kleinflächig und insbesondere oval.

Die druckseitige Formvariation 16 ist eine Aufdickung der Druckseite 6, die sich von der Anströmkante 10a stromabwärts bis zu etwa 50% der axialen Breite des Schaufelblattes 2a. erstreckt. Bevorzugterweise hat die Aufdickung 16 eine radiale Erstreckung bis zu etwa 15% einer Schaufelkanalhöhe, gemessen von der Seitenwandung 14. Sie hat, wie durch die gestrichelte Linie angedeutet, einen profilartigen Verlauf und ist an der Druckseite 6 nahe der Seitenwandung 14 ausgebildet. Aufgrund ihrer Erstreckung in den Schaufelkanal 4 bewirkt sie eine Kanalquerschnittsverringerung im seitenwandnahen Bereich.

Wie in Figur 2a gezeigt, hat die Aufdickung 16 bei einem Ausführungsbeispiel einen dreieckigen Querschnitt. Dabei weist sie ihre größte Erstreckung in den Schaufelkanal 4 unmittelbar an der Seitenwandung 14 auf. In Radialrichtung des Schaufelgitters 1 bzw. der Strömungsmaschine ist die Querschnittsfläche der Aufdickung 16 linear reduziert und geht dann sanft in einen ursprünglichen Druckseitenverlauf 21 des Schaufelblattes 2a außerhalb des Seitenwandbereichs über.

In Figur 2b ist ein Ausführungsbeispiel gezeigt, bei dem die Aufdickung 16 normal zur Seitenwandung 14 verläuft und über einen Kurvenabschnitt mit beispielsweise einem Wendepunkt in einen unveränderten Druckseitenverlauf 21 des Schaufelblattes 2a außerhalb des Seitenwandbereichs übergeht.

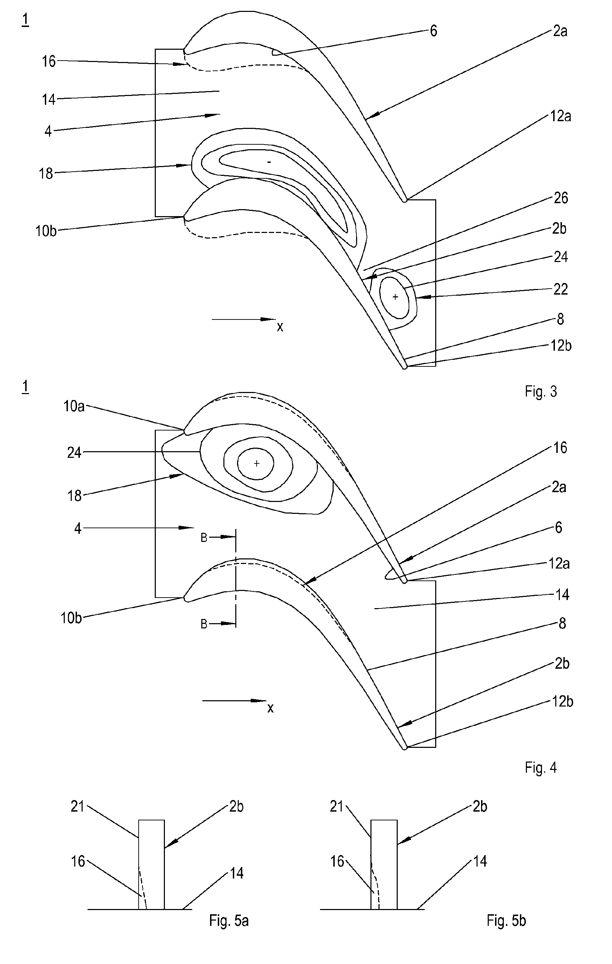

Bei dem in Figur 3 gezeigten zweiten Ausführungsbeispiel des Schaufelgitters 1 ist in einem Schaufelkanal 4 zwischen zwei Schaufelblättern 2a, 2b zusätzlich zur saugseitigen Seitenwandkonturierung 18 in Form einer Vertiefung und zur druckseitigen Formvariation 16 in Form einer Aufdickung eine zweite Seitenwandkonturierung 22 vorgesehen.

Die saugseitige Vertiefung 18 beginnt im Unterschied zum ersten Ausführungsbeispiel nach Figur 1 stromab der Anströmkante 10b des zweiten Schaufelblattes 2b. Ihr von der Saugseite 8 beanstandeter tiefster Abschnitt ist großflächig und insbesondere bogenförmig.

Die druckseitige Aufdickung 16 des zweiten Ausführungsbeispiels ist gleich der druckseitigen Aufdickung 16 des ersten Ausführungsbeispiels nach den Figuren 1, 2a und 2b ausgebildet.

Die zweite Seitenwandkonturierung 22 ist eine saugseitige Erhebung. Sie ist zeichnerisch durch Höhenlinien 24 dargestellt, wobei ihr höchster Abschnitt mit einem Pluszeichen versehen ist. Sie ist mit ihrem höchsten Abschnitt von der Saugseite 8 beabstandet und somit ein Hügel. In dem gezeigten zweiten Ausführungsbeispiel ist der Hügel in Draufsicht in etwa konusförmig. Die saugseitige Erhebung 22 ist über einen nicht-konturierten bzw. konturfreien Seitenwandabschnitt 26 von der saugseitigen Vertiefung 18 beabstandet und endet in etwa an der gleichen axialen Position wie Abströmkanten 12a, 12b der Schaufelblätter 2a, 2b. Dabei liegt ihr durch ein Pluszeichen gekennzeichneter höchster Abschnitt vorzugsweise im Wesentlichen stromauf der axialen Position der Abströmkanten 12a, 12b. Bevorzugterweise hat der höchste Abschnitt eine ovale Plateaufläche.

Bei dem in Figur 4 gezeigten dritten Ausführungsbeispiel des erfindungsgemäßen Schaufelgitters 1 ist in einem Schaufelkanal 4 zwischen zwei Schaufelblättern 2a, 2b zumindest eine innere Seitenwand 14 mit einer umfangsunsymmetrischen druckseitigen Seitenwandkonturierung 18 und mit einer gegenüberliegenden saugseitigen Formvariation 16 des Schaufelblattes 2b versehen.

Die Seitenwandkonturierung 18 ist zeichnerisch durch Höhenlinien 24 dargestellt. Sie ist mit ihrem durch ein Pluszeichen gekennzeichneten maximalen bzw. höchsten Abschnitts von der Druckseite 6 in Umfangsrichtung beabstandet und somit als ein Hügel ausgebildet. Sie beginnt stromauf der Anströmkante 10a und erstreckt sich bis zu etwa 50% der axialen Breite des Schaufelblattes 2a. Bevorzugterweise hat der höchste Abschnitt eine kreisförmige Plateaufläche.

Die Formvariation 16 ist eine in die Saugseite 8 eingebrachte Abtragung, die sich stromabwärts der Anströmkante 10b in einem Bereich von etwa 10% bis 75% einer axialen Schaufelbreite erstreckt. Bevorzugterweise hat die Abtragung 16 eine radiale Erstreckung bis zu etwa 15% einer Schaufelkanalhöhe, gemessen von der Seitenwand 14. Sie hat, wie durch die gestrichelte Linie angedeutet, einen profilartigen Verlauf und ist an der Saugseite 8 nahe der Seitenwandung 14 ausgebildet. Aufgrund ihrer Erstreckung in den Schaufelkanal 4 bewirkt sie eine Kanalquerschnittsvergrößerung im seitenwandnahen Bereich.

Wie in Figur 5a gezeigt, hat die Abtragung 16 bei einem Ausführungsbeispiel einen dreieckigen Querschnitt. Dabei weist sie ihre größte Erstreckung in die Saugseite 6 bzw. in das Schaufelblatt 2b unmittelbar an der Seitenwandung 14 auf. In Radialrichtung des Schaufelgitters 1 bzw. der Strömungsmaschine ist die Querschnittsfläche der Abtragung 16 linear reduziert und geht dann sanft in einen ursprünglichen Druckseitenverlauf 21 des Schaufelblattes 2b außerhalb des Seitenwandbereichs über.

In Figur 5b ist ein Ausführungsbeispiel gezeigt, bei dem die Abtragung 16 normal zur Seitenwandung 14 verläuft und über einen Kurvenabschnitt mit beispielsweise einem Wendepunkt in den unveränderten Druckseitenverlauf 21 des Schaufelblattes 2b außerhalb des Seitenwandbereichs übergeht.

Bei dem in Figur 6 gezeigten vierten Ausführungsbeispiel des erfindungsgemäßen Schaufelgitters 1 ist in einem Schaufelkanal 4 zwischen zwei Schaufelblättern 2a, 2b im Unterschied zum dritten Ausführungsbeispiel nach Figur 4 zusätzlich zur druckseitigen Seitenwandkonturierung 18 in Form einer Erhebung und zur saugseitigen Formvariation 16 in Form einer Abtragung eine zweite Seitenwandkonturierung 22 vorgesehen. Die druckseitige Seitenwandkonturierung 18 und die saugseitigen Formvariation 16 sind wie bei dem dritten Ausführungsbeispiel nach den Figuren 4, 5a und 5b ausgebildet, so dass zur Vermeidung von Wiederholungen detaillierte Einzelbetrachtungen der druckseitige Seitenwandkonturierung 18 und der saugseitigen Formvariation 16 entfallen.

Die zweite Seitenwandkonturierung 22 ist eine druckseitige Vertiefung. Sie ist zeichnerisch durch Tiefenlinien 20 dargestellt. Ihr durch ein Minuszeichen gekennzeichneter tiefster Abschnitt ist von der Saugseite 8 beabstandet und beispielsweise oval. Sie ist vorzugsweise durch einen konturfreien Seitenwandabschnitt 26 von der Erhebung 18 beabstandet und endet axial vor der Abströmkante 12a des Schaufelblattes 2a.

In Figur 7 ist ein Schaufelgitter 1 mit einer Vielzahl von Schaufelkanälen 4 gezeigt, dessen benachbarten Schaufelblätter 2a, 2b jeweils eine Formvariation 16a, 16b aufweisen. Die Formvariation 16a des einen Schaufelblattes 2a ist entsprechend der Formvariation 16 nach den Figuren 1,2a, 2b und 3 im Seitenwandbereich ausgebildet. Die Formvariation 16b des anderen Schaufelblattes 2b ist entsprechend der Formvariation 16 nach den Figuren 4,5a, 5b und 6 im Seitenwandbereich ausgebildet.

Die eine Formvariation 16a ist eine Aufdickung der Druckseite 6 des Schaufelblattes 2a, die sich von der Anströmkante 10a stromabwärts bis zu etwa 50% der axialen Breite des Schaufelblattes 2a erstreckt. Bevorzugterweise hat die Aufdickung 16a eine radiale Erstreckung bis zu etwa 15% einer Schaufelkanalhöhe. Sie hat, wie durch die gestrichelte Linie angedeutet, einen profilartigen Verlauf und ist an der Druckseite 6 nahe der Seitenwandung 14 ausgebildet. Aufgrund ihrer Erstreckung in den Schaufelkanal bewirkt sie eine Kanalquerschnittsverringerung im seitenwandnahen Bereich.

Die andere Formvariation 16b ist eine Abtragung der Saugseite 8 des Schaufelblattes 10, die sich stromabwärts der Anströmkante 10b in einem Bereich von etwa 10% bis 75% der axialen Schaufelbreite erstreckt. Bevorzugterweise hat die Abtragung 16b eine radiale Erstreckung bis zu etwa 15% einer Schaufelkanalhöhe. Sie hat, wie durch die gestrichelte Linie angedeutet, einen profilartigen Verlauf und ist an der Saugseite 8 nahe der Seitenwandung 14 ausgebildet. Aufgrund ihrer Erstreckung in den Schaufelkanal 4 bewirkt sie eine Kanalquerschnittsverringerung im seitenwandnahen Bereich.

Es sei erwähnt, dass sich die Formvariationen 16, 16a, 16b des Schaufelprofils bzw. die jeweils spezifische Gestaltung der Druckseite 6 bzw. der Saugseite 8 bei sämtlichen Ausführungsbeispielen im Seitenwandbereich sowohl auf Ausbildungen mit als auch ohne Fillet beziehen/bezieht.

Offenbart sind ein Schaufelgitter einer Strömungsmaschine, das zumindest eine schaufelblattseitige in der Nähe einer Seitenwand angeordnete und sich stromab erstreckende Formvariation eines Schaufelblattes und zumindest eine Seitenwandkonturierung der Seitenwand oder zumindest eine seitenwandnahe zweite Formvariation eines benachbarten Schaufelblattes aufweist, sowie eine Strömungsmaschine.

### Bezugszeichenliste

- 1: Schaufelgitter
- 2a, b: Schaufelblatt
- 4: Schaufelkanal
- 6: Druckseite
- 8: Saugseite
- 10a, b: Anströmkante
- 12a, b: Abströmkante
- 14: innere Seitenwand
- 16, 16a, 16b: Formvariation
- 18: Seitenwandkonturierung
- 20: Tiefenlinie
- 21: unveränderter Seitenverlauf
- 22: Seitenwandkonturierung
- 24: Höhenlinie
- 26: konturfreier Seitenwandabschnitt

- x: Axialrichtung

## Patentansprüche

1. Schaufelgitter (1) einer Strömungsmaschine, mit einer Vielzahl von Schaufelkanälen (4), die in Umfangsrichtung von jeweils einer Druckseite (6) eines Schaufelblattes (2a) und von einer gegenüberliegenden Saugseite (8) eines benachbarten Schaufelblattes (2b) begrenzt sind, und die in Radialrichtung von jeweils zwei gegenüberliegenden Seitenwänden (14) begrenzt sind, und wobei zumindest jeweils eine Seitenwand (14) der Schaufelkanäle zumindest eine umfangsunsymmetrische Seitenwandkonturierung (18) im Bereich einer der Schaufelblätter (2a, 2b) aufweist, **dadurch gekennzeichnet, dass** das andere Schaufelblatt (2b, 2a) im Bereich seiner der Seitenwandkonturierung (18) zugewandten Druckseite (6) oder Saugseite (8) zumindest eine sich stromab erstreckende Formvariation (16) nahe der Seitenwand (14) aufweist, die eine radiale Erstreckung bis zu etwa 15% einer Schaufelkanalhöhe von der Seitenwandung (14) hat, wobei, die Formvariation (16) eine Aufdickung der Druckseite (6) ist, sie sich von einer Anströmkante (10a) stromabwärts bis zu etwa 50% einer axialen Breite des Schaufelblattes (2a) erstreckt, oder die Formvariation eine Abtragung der Saugseite (8) ist, sie sich stromabwärts einer Anströmkante (10b) in einem Bereich von etwa 10% bis 75% einer axialen Schaufelbreite erstreckt.

2. Schaufelgitter nach Anspruch 1, wobei die zumindest eine Seitenwandkonturierung (18) eine saugseitige Vertiefung ist.

3. Schaufelgitter nach Anspruch 2, wobei die Seitenwandkonturierung (18) stromauf der schaufelblattseitigen Anströmkante (10b) beginnt.

4. Schaufelgitter nach Anspruch 2 oder 3, wobei stromab der Seitenwandkonturierung (18) eine Seitenwandkonturierung (22) in Form einer saugseitigen Erhebung angeordnet ist.

5. Schaufelgitter nach Anspruch 1, wobei die zumindest eine Seitenwandkonturierung (18) eine druckseitige Erhebung ist.

6. Schaufelgitter nach Anspruch 5, wobei die Formvariation (16) stromab der schaufelblattseitigen Anströmkante (10b) beginnt und die Seitenwandkonturierung (18) stromauf der schaufelblattseitigen Anströmkante (10a) beginnt.

7. Schaufelgitter nach Anspruch 5 oder 6, wobei stromab der Seitenwandkonturierung (18) eine Seitenwandkonturierung (22) in Form einer druckseitigen Vertiefung angeordnet ist.

8. Strömungsmaschine mit zumindest einem Schaufelgitter (1) nach einem der vorhergehenden Ansprüche.

## Claims

1. A blade grid (1) of a turbomachine, having a plurality of blade channels (4) which are delimited in the peripheral direction by, in each case, a pressure side (6) of a blade (2a) and by an opposing suction side (8) of an adjacent blade (2b) and which are delimited in the radial direction by, in each case, two opposing side walls (14), and wherein at least, in each case, one side wall (14) of the blade channels has at least one side-wall contouring (18) that is asymmetrical with respect to the periphery in the region of one of the blades (2a, 2b), **characterised in that** the other blade (2b, 2a) has in the region of its pressure side (6) or suction side (8) facing the side-wall contouring (18) at least one form-variation (16) close to the side wall (14) extending downstream and having a radial extent up to approximately 15% of the blade-channel height from the side wall (14), wherein the form-variation (16) is a thickened portion of the pressure side (6) and extends from a leading edge (10a) downstream up to approximately 50% of an axial width of the blade (2a),
or the form-variation is a reduction of the suction side (3) and extends downstream of a leading edge (10b) in a region of approximately 10% to 75% of an axial blade width.

2. A blade grid according to claim 1, wherein the at least one side-wall contouring (18) is a suction-side depression.

3. A blade grid according to claim 2, wherein the side-wall contouring (18) starts upstream of the blade-side leading edge (10b).

4. A blade grid according to claim 2 or 3, wherein arranged downstream of the side-wall contouring (13) there is a side-wall contouring (22) in the form of a suction-side elevation.

5. A blade grid according to claim 1, wherein the at least one side-wall contouring (18) is a pressure-side elevation.

6. A blade grid according to claim 5, wherein the form-variation (16) starts downstream of the blade-side leading edge (10b), and the side-wall contouring (18) starts upstream of the blade-side leading edge (10a).

7. A blade grid according to claim 5 or 6, wherein arranged downstream of the side-wall contouring (18) there is a side-wall contouring (22) in the form of a pressure-side depression.

8. A turbomachine having at least one blade grid (1) according to one of the preceding claims.

## Revendications

1. Grille d'aubes profilées (1) d'une turbomachine, comportant une pluralité de canaux d'aube (4) limités, dans le sens périphérique, respectivement par un intrados (6) d'une aube (2a) et par un extrados (8), situé en face, d'une aube voisine (2b), et limités, dans le sens radial, respectivement par deux parois latérales (14) se faisant face, et dans laquelle au moins une paroi latérale (14) des canaux d'aube présente au moins un contour de paroi latérale (18), dont le pourtour est asymétrique, au niveau de l'une des aubes (2a, 2b), **caractérisée en ce que** l'autre aube (2b, 2a) présente, au niveau d'un intrados (6) ou extrados (8), dirigé vers le contour de paroi latérale (18), au moins une variation de forme (16) s'étendant en aval à proximité de la paroi latérale (14) qui s'étend radialement jusqu'à environ 15 % de la hauteur des canaux d'aube de la paroi latérale (14), la variation de forme (16) étant un épaississement de l'intrados (6) et s'étendant depuis une arête d'afflux (10a) en aval jusqu'à environ 50 % d'une largeur axiale de l'aube (2a),
ou bien la variation de forme étant l'enlèvement de l'extrados (8) et s'étendant en aval d'une arête d'afflux (10b) dans une zone d'environ 10% à 75 % d'une largeur d'aube axiale.

2. Grille d'aubes profilées selon la revendication 1, dans laquelle au moins un contour de paroi latérale (18) est un creux côté extrados.

3. Grille d'aubes profilées selon la revendication 2, dans laquelle le contour de paroi latérale (18) commence en amont de l'arête d'afflux (10b) du côté des aubes.

4. Grille d'aubes profilées selon la revendication 2 ou la revendication 3, dans laquelle un contour de paroi latérale (22) en forme d'élévation côté extrados est disposé en aval du contour de paroi latérale (18).

5. Grille d'aubes profilées selon la revendication 1, dans laquelle au moins un contour de paroi latérale (18) est une élévation côté intrados.

6. Grille d'aubes profilées selon la revendication 5, dans laquelle la variation de forme (16) commence en aval de l'arête d'afflux (10b) côté aubes et le contour de paroi latérale (18) commence en amont de l'arête d'afflux (10a) côté aubes.

7. Grille d'aubes profilées selon la revendication 5 ou la revendication 6, dans laquelle un contour de paroi latérale (22) en forme de creux côté intrados est disposé en aval du contour de paroi latérale (18).

8. Turbomachine comportant au moins une grille d'aubes profilées (1) selon l'une quelconque des revendications précédentes.
